# EUROPEAN PATENT SPECIFICATION

(11) **EP 1 489 398 B1**
(45) Date of publication and mention of the grant of the patent: **28.07.2010**
(21) Application number: 04076714.7
(22) Date of filing: 11.06.2004
(51) Int. Cl.: G01J 5/08

(54) **Laser system**
Lasersystem
Système laser

(30) Priority: 16.06.2003 US 478935 P; 14.07.2003 US 486951 P
(43) Date of publication of application: 22.12.2004
(60) Divisional application: 10163052.3
(73) Proprietor: White Box Inc., Stamford, Connecticut 06907 (US)
(72) Inventor: Hollander, Milton Bernard, Stamford Connecticut 06903 (US); Baghai, Shahin, Trumbull Connecticut 06611 (US)
(74) Representative: Steil, Christian

(56) References cited:
- US-A- 5 368 392
- US-A1- 2001 005 393
- US-B1- 6 377 400

## Description

This invention concerns a laser system and in particular a laser system suitable for use with an infra-red measurement device.

Infra-red measurement devices, for example, non-contact infra-red temperature measurement devices, comprise an infra-red detector and an optical system to focus the infra-red radiation from the object whose temperature is being measured onto the detector. Many of these devices are portable or hand-held and it is therefore important that the operator is able to point the device at exactly the right place so that the correct temperature is being measured. To this end, some such devices are provided with a laser emitter with which the device as a whole can be aimed. The laser beam may appear as a "spot" at the centre of the optical field, or may be split, e. g. by diffraction device, to produce a number of spots to define the measurement area in the optical field.

However, for safety reasons, there is an upper limit on the power of the laser beam which can be employed with such a device. This means that the efficiency of some of the conventional devices, when used in smoky or dark conditions, or at greater distances from the object being measured, is less than satisfactory.

Document US-A-5,368,392 discloses a hand-held infra-red measurement device having an infra-red detector defining a field of view, and two individual laser emitters for sighting purposes, which define a sighting area.

Document US-A-6,377,400 Bl discloses a hand-held infra-red measurement device having an infra-red detector defining a field of view and a single laser emitter. Further, a carrier is provided that can be moved relative to the laser emitter so as to either output a single laser beam or a plurality of secondary laser beams which are derived from the single laser beam by a beam splitting device.

Document US 2001/0005393 A1 discloses a device for temperature measurement, including an infra-red detector and a sighting arrangement. The sighting arrangement is provided with a diffractive beam splitter for splitting a single laser beam into a plurality of secondary laser beams. The plurality of secondary laser beams can be arranged in various patterns, and may include a central laser beam.

It is the object of the invention to provide an infra-red measurement device and a corresponding method of sighting an infra-red detector, that can be used in smoky or dark conditions, or at greater distances.

The above object is achieved by a hand-held infra-red measurement device according to claim 1 and by a method of sighting an infra-red detector according to claim 11.

According to the present invention, there is provided an infra-red measurement device having at least two laser emitters which define a sighting area.

In one embodiment of the invention, two lasers are provided and these are each preferably split into a number of beams by means of, for example, a diffraction grating, diffraction lens, prism, or other beam splitting device. The fact that there are two laser emitting devices, means that effectively twice the power can be utilised since the safety limit is per laser emitting device, and thus twice the brightness of a conventional device attained. Each beam can be split more than once, e.g. sequentially, if desired to produce more complex patterns.

In another embodiment of the invention, four laser emitters are employed and at least some of the beams can be split by diffraction grating as before.

The laser emitters in the device of the present invention can be operated simultaneously, sequentially, or can be pulsed. Having greater brightness than conventional devices, the devices of the invention are excellent for use in dark or smoky conditions, for example for obtaining the temperatures of car engines, furnaces and the like. Moreover, the greater power allows the device to be used at greater distances from the object being measured than hitherto. The devices are preferably hand-held and may conveniently be battery powered.

According to the invention, the measurement device includes a construction array mounted with an infra red detector on a hand held device including a plurality of individual lasers of maximum safe power linked with on-off and/or power control switching wherein, at a first switch position, power supply to the lasers is cut off; in a second switch position, all the lasers are powered on, including an unmodified beam from one or more of the lasers directed to a position at or near the centre of the detector field of view; in a third switch position at least one laser is split by a diffraction element to produce a pattern of light intensity distribution spots on the measurement area surface to indicate to the user the edge of the field of view of the infra red detector together with a central spot from another un-split beam of a different laser.

In a further example, at least three lasers are provided, one defining a central or near central un-split spot, and the others each defining one or more spots each at or near the edges of the detector's field of view.

The invention will be described further, by way of example, with reference to the accompanying drawings, in which:
Figure 1 is a cross-sectional view of an infra-red temperature detector having two laser emitters;
Figure 2 is a similar view to Figure 1, wherein the device is configured for close field of view;
Figure 3 comprises diagrammatic representations of the field of view where four laser beams are employed in two configurations; and
Figure 4 is a similar view to Figure 3 showing two further laser field of view configurations.

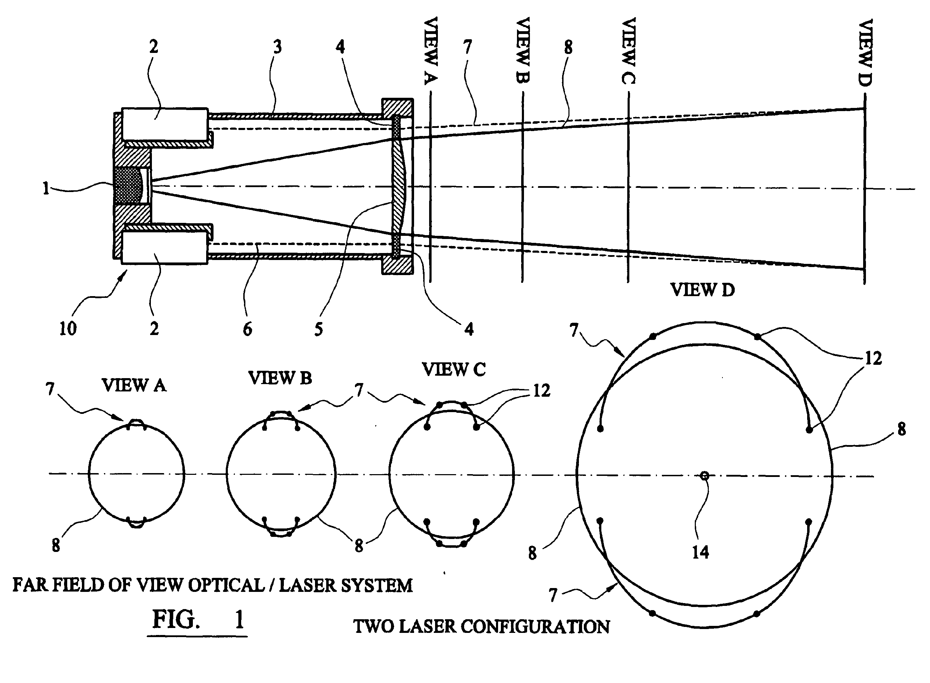

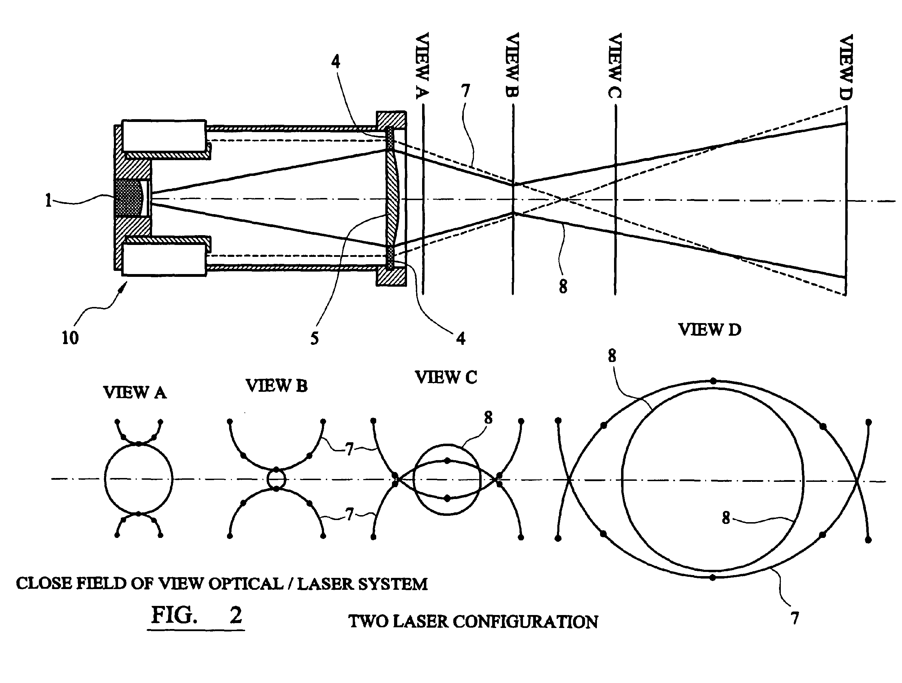

Referring to the drawings, and in particular Figures 1 and 2, Figure 1 illustrates a far field of view optical and laser system for an infra-red heat detection device generally designated (10). The device (10) comprises an infra-red detector (1) on which is focused infra-red radiation by means of an optical infra-red lens (5). The lens (5) is held in a lens housing (3) within which are located two laser modules (2) each producing a laser beam (6) which illuminate and pass through diffraction lenses (4).

The diffraction grating lenses (4) split each of the beams (6) into a series of dots (12) which, to the eye, form a laser envelope in the form of a semi-circle (7). The optical field of view of the detector (1) is defined by a field of view envelope (8), and it will be seen that the set up of the diffraction grating lenses is such that the laser envelope (7) matches the optical field of view envelope (8) at essentially all points along the operating range of the system as shown by the various views A, B, C and D. It will be appreciated that the optical envelope (8) is not, in practice, visible to the naked eye, whereas the laser envelopes (7) are.

In Figure 2, the device is set up differently to give a close field of view set up where the lens (5) causes the optical field of view to take the configuration illustrated. In this case, each diffraction grating lens (4) is set up so that the semi-circular laser envelopes (7) are inverted close to the device (10) (views A and B) but progressively move towards the pattern shown in Figure 1 at greater distances (views C and D). In each case, the operator is able to locate the centre of the optical field equidistant between the (visible) laser envelopes (7) and can thus sight the device accurately.

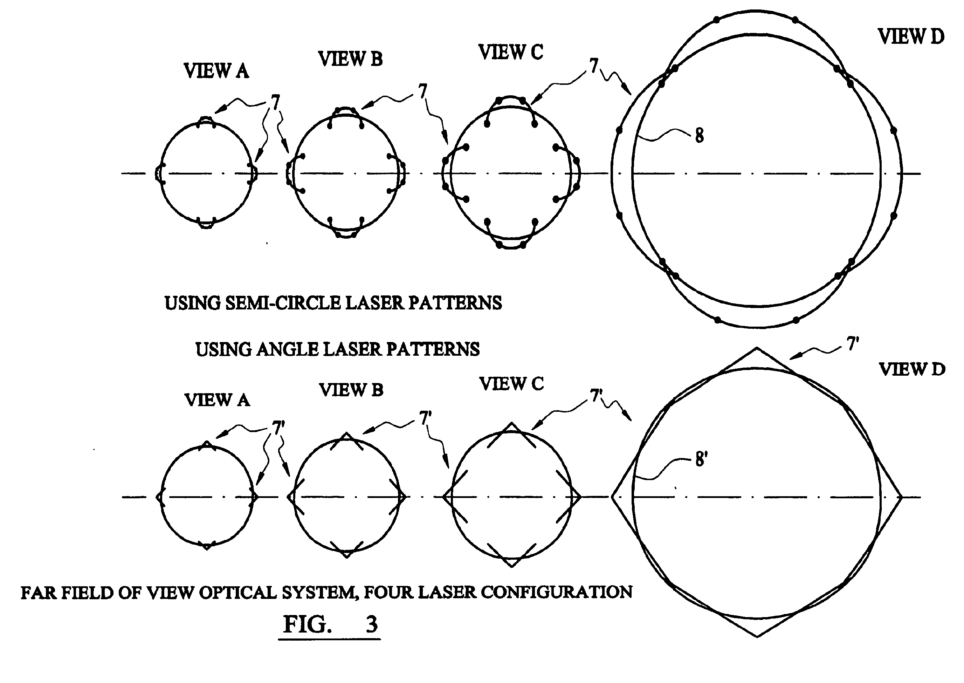

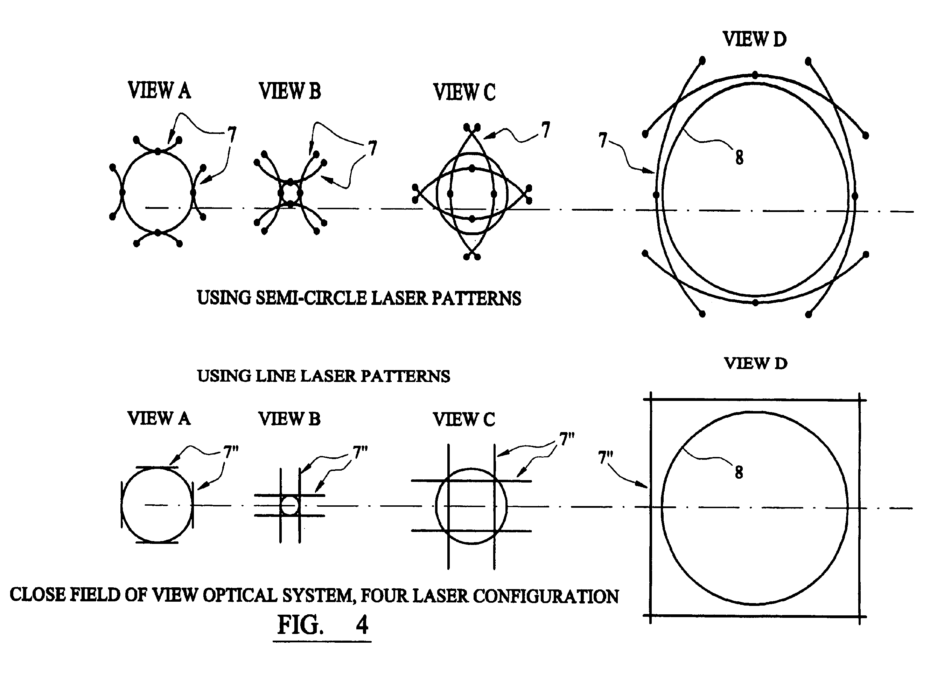

Referring now to Figure 3, the device (10) (not shown) incorporates four laser modules (2) producing four laser beams which are split by the diffraction grating lenses (4) into four semi-circular laser envelopes (7), or by selection of a different diffraction grating or lens, angular laser patterns (7'). The field of view configurations in Figure 3 are in respect of the far field of optical view system. In Figure 4, in contrast, a close field of view optical system is illustrated with four laser beams (6) producing four sets of laser envelopes (7) which can be semi-circular as before, or linear (7") by selecting the correct configuration of diffraction grating lens (4).

In an alternative embodiment, one of the modules (2) may be focussed so as to produce a spot (14) (Figure 1) at or near the centre of the optical field of view (8). If a single (un-split) spot (14) is produced this will be brighter than the split envelopes (7) and will be visible at a substantial distance away.

The use of four laser emitters (2) quadruples the permissible power, and therefore the brightness, of the laser envelope and is especially useful in dark or smoky conditions or at greater distances from the object being measured.

It will be appreciated that configurations other than semi-circles, angles, lines, and the like may be used to identify the optical field of view according to requirements. The detector of the invention provides a simple solution to the problem of brightness of the laser envelope in conditions of poor visibility or at greater distances from the object being measured.

## Claims

1. A hand-held infra-red measurement device (10) having a construction array (3) mounted with an infra-red detector (1) having a field of view (8) and at least two individual laser emitters (2) for sighting, purposes, which define a sighting area and are of maximum safe power linked with on-off and/or power control switching wherein, at a first switch position, power supply to the laser emitters (2) is cut off; in a second switch position, all the :laser emitters (2) are powered on, including an unmodified beam from one or more of the laser emitters (2) directed to a position (14) at or near the centre of the detector field of view (8); in a third switch position at least one laser beam (6) is split by a diffraction element (4) to produce a pattern (7; 7 ; 7" ; 14) of light intensity distribution spots (12) on the measurement area surface to indicate to the user the edge of the detector field of view (8) together with a central spot (14) from another un-split beam of a different laser emitter.

2. A device as claimed in claim 1 wherein two lasers (2) are provided.

3. A device as claimed in claim 1 wherein four lasers (2) are provided.

4. A device as claimed in any of claims 1 to 3 wherein at least one laser beam (6) is split into a number of beams by means of a diffraction grating (4), diffraction lens, prism or beam splitter.

5. A device as claimed in claim 4 wherein the laser beam (6) is split into a semi circular array (7) of spots.

6. A device as claimed in claim 4 wherein the laser beam (6) is split into an angled array (7') of spots.

7. A device as claimed in claim 4 wherein the laser beam (6) is split into a linear array (7'') of spots.

8. A device as claimed in any of claims 1 to 7 wherein the sighting area (7, 7', 7") matches the optical field of view (8).

9. A device as claimed in any of claims 1 to 8 wherein each laser beam (6) is split more than once.

10. A device as claimed in claim 1 wherein at least three laser emitters (2) are provided, one defining a central or near central un-split spot (14), and the other two defining one or more spots (12) each at or near the edges of the detector field of view (8).

11. A method of sighting an infra-red detector (1) which comprises providing two or more laser emitters (2) and focussing the resultant laser beams (6) into laser envelopes (7, 14) matching the optical field of view, wherein the laser emitters (2) are of maximum safe power linked with on-off and/or power control switching wherein, at a first switch position, power supply to the laser emitters (2) is cut off; in a second switch position, all the laser emitters (2) are powered on, including an unmodified beam from one or more of the lasers emitters (2) directed to a position (14) at or near the centre of the detector field of view (8); in a third switch position at least one laser beam (6) is split by a diffraction element (4) to produce a pattern (7; 7'; 7 " ; 14) of light intensity distribution spots (12) on the measurement area surface to indicate to the user the edge of the detector field of view (8) together with a central spot (14) from another un-split beam of a different laser emitter.

12. A method as claimed in claim 11 wherein the laser emitters (2) are operated simultaneously, sequentially, or are pulsed.

## Patentansprüche

1. Infrarot-Handmessvorrichtung (10) mit einem Konstruktionsaufbau (3), an dem ein Infrarot-Detektor (1) mit einem Blickfeld (8) sowie wenigstens zwei einzelne Laseremitter (2) zu Visierzwecken montiert sind, die einen Visierbereich definieren und eine maximale sichere Leistung aufweisen, und zwar verknüpft mit einer Ein/Aus- und/oder Leistungssteuerungsumschaltung, wobei die Leistungszufuhr zu den Laseremittern (2) in einer ersten Schaltposition unterbrochen ist; wobei sämtliche Laseremitter (2) in einer zweiten Schaltposition mit Leistung versorgt werden, und zwar einschließlich eines nicht modifizierten Strahls von einem oder mehreren der Laseremitter (2), der auf eine Position (14) auf oder in der Nähe der Mitte des Blickfeldes (8) des Detektors gerichtet ist; und wobei wenigstens ein Laserstrahl (6) durch ein Diffraktionselement (4) in einer dritten Schaltposition geteilt wird, um ein Muster (7; 7'; 7"; 14) von Lichtintensitätsverteilungs-Punkten (12) an der Messbereichsoberfläche zu erzeugen, um dem Benutzer den Rand des Blickfeldes (8) des Detektors anzuzeigen, und zwar zusammen mit einem zentralen Punkt (14) von einem weiteren ungeteilten Strahl eines unterschiedlichen Laseremitters.

2. Vorrichtung nach Anspruch 1, wobei zwei Laser (2) vorgesehen sind.

3. Vorrichtung nach Anspruch 1, wobei vier Laser (2) vorgesehen sind.

4. Vorrichtung nach einem der Ansprüche 1 bis 3, wobei wenigstens ein Laserstrahl (6) in eine Anzahl von Strahlen mittels eines Diffraktionsgitters (4), einer Diffraktionslinse bzw. eines Diffraktionsobjektives, eines Prismas oder eines Strahlteilers geteilt wird.

5. Vorrichtung nach Anspruch 4, wobei der Laserstrahl (6) in eine halbkreisförmige Anordnung (7) von Punkten geteilt wird.

6. Vorrichtung nach Anspruch 4, wobei der Laser (6) in eine gewinkelte Anordnung (7') von Punkten geteilt wird.

7. Vorrichtung nach Anspruch 4, wobei der Laserstrahl (6) in eine lineare Anordnung (7") von Punkten geteilt wird.

8. Vorrichtung nach einem der Ansprüche 1 bis 7, wobei der Visierbereich (7, 7', 7") mit dem optischen Blickfeld (8) übereinstimmt.

9. Vorrichtung nach einem der Ansprüche 1 bis 8, wobei jeder Laserstrahl (6) mehr als einmal geteilt wird.

10. Vorrichtung nach Anspruch 1, wobei wenigstens drei Laseremitter (2) vorgesehen sind, von denen einer einen zentralen oder nahezu zentralen ungeteilten Punkt (14) definiert und von denen die anderen zwei einen oder mehrere Punkte (12) definieren, die jeweils an oder in der Nähe der Ränder des Blickfeldes (8) des Detektors liegen.

11. Verfahren zum Anvisieren eines Infrarot-Detektors (1), wobei das Verfahren beinhaltet, zwei oder mehr Laseremitter (2) bereitzustellen und die resultierenden Laserstrahlen (6) in Lasereinhüllungen (7, 14) zu fokussieren, die mit dem optischen Blickfeld übereinstimmen, wobei die Laseremitter (2) jeweils eine maximale sichere Leistung haben, und zwar verknüpft mit einer Ein/Aus- und/oder Leistungssteuerungsumschaltung, wobei die Leistungszufuhr zu den Laseremittern (2) in einer ersten Schaltposition unterbrochen ist; wobei sämtliche Laseremitter (2) in einer zweiten Schaltposition mit Leistung versorgt werden, einschließlich eines nicht modifizierten Strahls von einem oder mehreren der Laseremitter (2), wobei der nicht modifizierte Strahl auf eine Position (14) auf oder in der Nähe der Mitte des Blickfeldes (8) des Detektors gerichtet ist; und wobei wenigstens ein Laserstrahl (6) in einer dritten Schaltposition mittels eines Diffraktionselementes (4) geteilt wird, um ein Muster (7; 7'; 7"; 14) von Lichtintensitätsverteilungs-Punkten (12) an der Messbereichsoberfläche zu erzeugen, um dem Benutzer den Rand des Blickfeldes (8) des Detektors anzuzeigen, und zwar zusammen mit einem zentralen Punkt (14) von einem weiteren ungeteilten Strahl eines unterschiedlichen Laseremitters.

12. Verfahren nach Anspruch 11, wobei die Laseremitter (2) gleichzeitig, sequentiell oder gepulst betrieben werden.

## Revendications

1. Dispositif de mesure infrarouge portatif (10) ayant un réseau de construction (3) dans lequel est monté un détecteur infrarouge (1) ayant un champ de vue (8) et au moins deux émetteurs laser individuels (2) utilisés à des fins de visée, qui définissent une zone de visée et ont une puissance de sécurité maximale liée à une commutation de marche-arrêt et/ou de commande de puissance, dans lequel, en une première position de commutation, l'alimentation en électricité des émetteurs laser (2) est interrompue ; en une seconde position de commutation, tous les émetteurs laser (2) sont alimentés en électricité, y compris un faisceau non modifié provenant d'un ou plusieurs des émetteurs laser (2) dirigés vers une position (14) située au, ou à proximité du centre du champ de vue du détecteur (8) ; en une troisième position de commutation, au moins un faisceau laser (6) est divisé par un élément de diffraction (4) afin de produire un motif (7 ; 7' ; 7" ; 14) de points de répartition d'intensité lumineuse (12) sur la superficie de mesure afin d'indiquer à l'utilisateur le bord du champ de vue (8) du détecteur en même temps qu'un point central (14) provenant d'un autre faisceau non divisé d'un émetteur laser différent.

2. Dispositif selon la revendication 1, dans lequel deux lasers (2) sont prévus.

3. Dispositif selon la revendication 1, dans lequel quatre lasers (2) sont prévus.

4. Dispositif selon l'une quelconque des revendications 1 à 3, dans lequel au moins un faisceau laser (6) est divisé en un certain nombre de faisceaux au moyen d'un réseau de diffraction (4), d'une lentille de diffraction, d'un prisme ou d'un diviseur de faisceaux.

5. Dispositif selon la revendication 4, dans lequel le faisceau laser (6) est divisé en un réseau (7) de points semi-circulaire.

6. Dispositif selon la revendication 4, dans lequel le faisceau laser (6) est divisé en un réseau (7') de points formant un angle.

7. Dispositif selon la revendication 4, dans lequel le faisceau laser (6) est divisé en un réseau (7") linéaire de points.

8. Dispositif selon l'une quelconque des revendications 1 à 7, dans lequel la zone de visée (7, 7', 7") correspond au champ de vue optique (8).

9. Dispositif selon l'une quelconque des revendications 1 à 8, dans lequel le faisceau laser (6) est divisé plus d'une fois.

10. Dispositif selon la revendication 1, dans lequel au moins trois émetteurs laser (2) sont prévus, l'un définissant un point central ou pratiquement central (14) non divisé, et les deux autres définissant un ou plusieurs points (12) se situant chacun sur ou à proximité des bords du champ de vue (8) du détecteur.

11. Procédé de visée d'un détecteur infrarouge (1) qui consiste à prévoir deux émetteurs laser (2) ou plus et à focaliser les faisceaux laser (6) obtenus sous la forme d'enveloppes laser (7, 14) adaptées au champ de vue optique, dans lequel les émetteurs laser (2) ont une puissance de sécurité maximale liée à une commutation de marche-arrêt et/ou de commande de puissance, dans lequel, en une première position de commutation, l'alimentation en électricité des émetteurs laser (2) est interrompue ; en une seconde position de commutation, tous les émetteurs laser (2) sont alimentés en électricité, y compris un faisceau non modifié provenant d'un ou plusieurs des émetteurs laser (2) dirigés vers une position (14) située au ou à proximité du centre du champ de vue (8) du détecteur ; en une troisième position de commutation, au moins un faisceau laser (6) est divisé par un élément de diffraction (4) afin de produire un motif (7 ; 7' ; 7" ; 14) de points (12) de répartition d'intensité lumineuse sur la superficie de mesure afin d'indiquer à l'utilisateur le bord du champ de vue (8) du détecteur en association avec un point central (14) à partir d'un autre faisceau non divisé d'un émetteur laser différent.

12. Procédé selon la revendication 11, dans lequel les émetteurs lasers (2) sont mis en fonctionnement simultanément, séquentiellement ou par impulsions.
